# EUROPEAN PATENT APPLICATION

(11) **EP 1 291 691 A1**
(43) Date of publication of application: **12.03.2003**
(21) Application number: 01307628.6
(22) Date of filing: 07.09.2001
(51) Int. Cl.: G02B 6/42

(54) **Glass joint for an optical fibre module and a method of joining an optical fibre to an optical module housing**

(71) Applicant: Agilent Technologies, Inc. (a Delaware corporation), Palo Alto, CA 94303 (US)
(72) Inventor: Meadowcroft, Simon, Stowmarket, Suffolk IP14 1TY (GB); Shaw, Julia Helen, Ipswich, Suffolk IP1 3PZ (GB); Matthews, Nigel Rowland, Ipswich, Suffolk IP4 3NE (GB)
(74) Representative: Coker, David Graeme

(57) **Abstract**

An optical fibre (6) having a core (7) and a cladding (8) is joined to an optical module housing (2) at least partly formed of metal by means of a glass joint (13) which is formed from a glass having a refractive index less than that of the cladding (8). This reduces the amount of light transmitted through the cladding/joint interface and therefore the amount of heat conducted into the metal housing (2), thereby reducing the thermal stresses imposed on the housing (2) and on the fibre (6), thereby improving the coupling characteristic of the fibre (6) with a laser diode (10).

## Description

### Field of the Invention

This invention relates to a glass joint for an optical fibre module and a method of joining an optical fibre to an optical module housing, and more particularly, though not exclusively, to a glass seal for an optical fibre module having a metal element as part of the module housing.

### Background of the Invention

In many situations in which an optical fibre needs to be fixed in a desired position in a module, for example, so as to be accurately aligned with a laser emitting diode, the fibre is arranged to be housed within a protective housing, often made completely or partly of metal. In order to fix the fibre in position, a glass joint or seal is used. By "glass joint" it is intended to mean any situation where the fibre is fixed in position to a housing using glass, whereas by "glass seal" is meant a situation where the glass "joint" actually forms a seal to the housing, which is often a hermetic seal. An example of a situation where the fibre is hermetically sealed to a metal housing would be in an undersea repeater station module.

The fibre is generally formed of a central core through which the light predominantly propagates, and a cladding surrounding the core. The cladding is formed of a glass having a relatively low refractive index, usually about 1.46. Obviously, the glass forming the joint or seal, must have a melting point lower than the glass forming the cladding so that the glass seal can be formed without damaging the cladding. However, such high temperature glasses usually have a relatively high refractive index, generally about 1.8.

A problem which has been found with such glasses, is that having a higher refractive index than that of the cladding, light rays that enter the cladding at particular angles will not be reflected at the cladding ― seal interface, but will instead be refracted into the seal and be absorbed by the seal. As the light energy is transformed into heat energy, this heat energy is conducted into the metal housing of the module causing thermal stresses in the housing, which leads to thermal expansion and causes the fibre to move and thereby can cause non-uniform characteristics in the coupling of the fibre with the laser. Clearly, heating of the module housing also results in non-uniform heating of the fibre which also results in non-linear transmission characteristics of the fibre.

### Brief Summary of the Invention

The present invention therefore seeks to provide a glass joint for an optical fibre module and a method of joining an optical fibre to an optical module housing which overcomes, or at least reduces the above-mentioned problems of the prior art.

Accordingly, in a first aspect, the invention provides a glass joint for joining an optical fibre including a core and a cladding to an optical module housing at least partly formed of metal, the glass joint being formed from a glass having a refractive index less than that of the cladding.

In a preferred embodiment, the refractive index of the glass is less than 1.46, and preferably less than about 1.43.

In a second aspect, the invention provides an optical fibre module comprising an optical fibre including a core and a cladding, an optical module housing at least partly formed of metal, and a glass joint joining the optical fibre to the optical module housing, the glass joint being as described above.

Preferably, the glass joint provides a hermetic glass seal between the optical fibre and the optical module housing.

In a preferred embodiment, the optical fibre module is incorporated in an undersea repeater station.

According to a third aspect, the invention provides a method of joining an optical fibre to an optical module housing comprising the steps of providing an optical module housing at least partly made of metal, providing an optical fibre having a core and a cladding, locating the optical fibre in the housing, and joining the fibre to the housing by means of a glass joint as described above.

Preferably, the glass joint is a hermetic glass seal..

### Brief Description of the Drawings

Two embodiments of the invention will now be more fully described, by way of example, with reference to the drawings, of which:
FIG. 1 shows a schematic diagram of an optical fibre within an optical module housing according to one embodiment of the present invention; and
FIG. 2 shows a schematic diagram of an optical fibre attached to a metal component according to a second embodiment of the present invention.

### Detailed Description of the Drawings

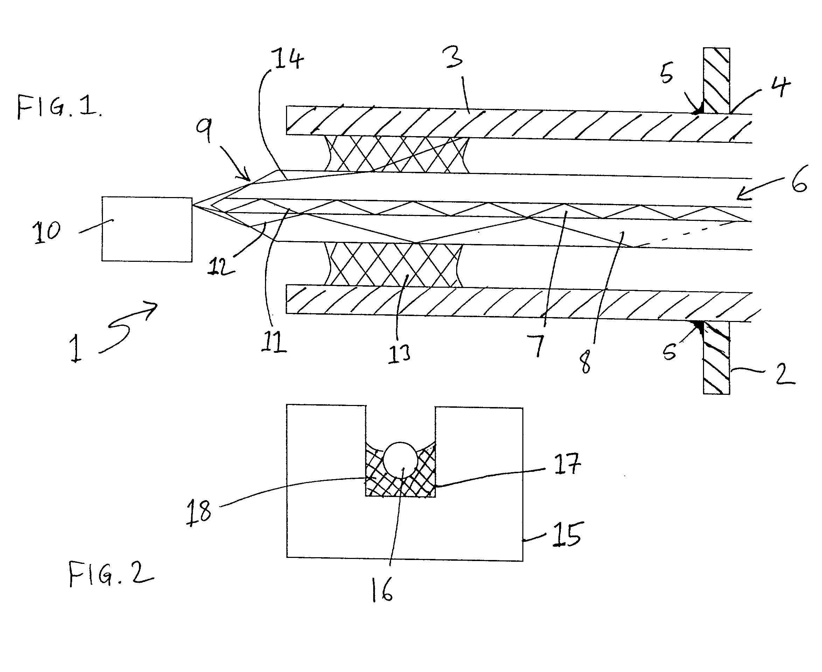

Thus, as partly shown in FIG. 1, an optical fibre module 1 has a housing 2, which may be made of metal. A protective tube 3 passes through an aperture 4 in the housing 2 and is welded to the housing, as shown at 5, the protective tube also being formed of metal. The protective tube 3 contains within it an optical fibre 6 having a central optical glass core 7 surrounded by a glass cladding 8. The protective tube 3 and the optical fibre 6 extend out from the module 1 to the next component that the optical fibre is to be coupled to. This may be some way away, of course, especially if the module 1 forms part of an undersea repeater station.

As is well known, the end 9 of the optical fibre 6 that is within the module 1 is to be aligned with a semiconductor laser diode 10, such that light is coupled from a lasing portion of the diode 10 into the end face of the optical fibre 6. The end face of the optical fibre 6 is arranged to be tapered, so that as much of the light from the laser diode as possible is coupled into the central core 7 of the fibre 6 or into the cladding 8 at an angle such that the light preferably refracts into the central core 7 from the core/cladding interface, or at least does not escape from the cladding. One ray of light 11 is shown entering the central core 7 and being reflected from the core/cladding interface to propagate down the core in the desired manner. Another light ray 12 is shown as entering the cladding 8 and reflecting from the core/cladding interface and the exterior of the cladding until it is absorbed by the cladding, as shown by the dotted line. It will be appreciated that the light ray must be incident on the exterior surface of the cladding at a fairly shallow angle in order to reflect off it rather than be transmitted through it.

The optical fibre 6 is fixed and sealed to the protective tube 3 by a glass joint 13. The glass joint 13 is made of a glass having a refractive index lower than the refractive index of the cladding 8 of the optical fibre 6, and can provide a hermetic seal between the protective tube 3 and the optical fibre 6. The cladding usually has a refractive index of about 1.46 and the refractive index of the glass joint 13 is lower than that, preferably about 1.43. By making the glass joint have a refractive index less than that of the cladding, light rays incident on the joint/cladding interface are less likely to be transmitted through the interface and hence into the glass joint 13, and more likely to be reflected off the join/cladding interface back into the cladding.

As shown in FIG. 1, a light ray 14 entering the cladding 8 from the laser diode 10 is transmitted through the joint/cladding interface into the glass joint 13 where it is absorbed and converted into heat energy. The heat energy is then conducted through the protective tube to the metal housing 2. By making the glass joint from a glass having a low refractive index, the amount of light reflected from the joint/cladding interface will be increased, thus decreasing the amount of light energy being converted to heat in the joint and being conducted to the housing. By making the refractive index about 1.43, only light rays incident upon the joint/cladding interface at an angle of more than about 20° will be transmitted through the interface. This contrasts to the situation where the refractive index of the glass joint is 1.46 or more, as is presently the case, where light rays at angles of incidence of more than about 11.6° are transmitted through the joint/cladding interface. Glasses with a refractive index as low as 1.43, but still having a melting point sufficiently low to be able to be used to form the joint, are known to be available, for example from Schott Glass Electronic Packaging of Christoph-Dorner Str. 29, D-84028 Landshut, Germany, and known as, for example, FK54, and from Ohara of Nording 30A, D-65719 Hofheim a Ts., Germany and known as, for example, S-FPL53.

A further embodiment of the invention is shown in FIG. 2, where an optical fibre 16 is shown attached to a metal component 15, such as, for example in an alignment structure. In this case, the optical fibre 16 is mounted within a groove or channel 17 in the component 15 and is partly embedded in the glass joint 18 which fills the bottom of the channel 17. The glass joint 18 does not provide a hermetic seal, but does fix the fibre in position relative to the component 15. Again, using a glass of low refractive index to form the glass joint limits the amount of light that is transmitted through the joint/cladding interface, so that the amount of heat conducted into the metal component 15 is reduced, compared to previously used glass joints.

It will be appreciated that although only two particular embodiments of the invention have been described in detail, various modifications and improvements can be made by a person skilled in the art without departing from the scope of the present invention.

## Claims

1. A glass joint (13) for joining an optical fibre (6) including a core (7) and a cladding (8) to an optical module housing (2) at least partly formed of metal, the glass joint being formed from a glass having a refractive index less than that of the cladding (8).

2. A glass joint according to claim 1, wherein the refractive index of the glass is less than 1.46.

3. A glass joint according to claim 2, wherein the refractive index of the glass is less than about 1.43.

4. An optical fibre module (1) comprising an optical fibre (6) including a core (7) and a cladding (8), an optical module housing (2) at least partly formed of metal, and a glass joint (13) joining the optical fibre (6) to the optical module housing (2), the glass joint (13) being as defined in any one of claims 1 to 3.

5. An optical fibre module (1) according to claim 4, wherein the glass joint (13) provides a hermetic glass seal between the optical fibre (6) and the optical module housing (2).

6. An undersea repeater station incorporating an optical fibre module (1) according to either claim 4 or claim 5.

7. A method of joining an optical fibre (6) to an optical module housing (2) comprising the steps of:
providing an optical module housing (2) at least partly made of metal;
providing an optical fibre (6) having a core (7) and a cladding (8);
locating the optical fibre (6) in the housing (2); and
joining the fibre (6) to the housing (2) by means of a glass joint (13) according to any one of claims 1 to 3.

8. A method of joining an optical fibre (6) to an optical module housing (2) according to claim 7, wherein the glass joint (13) is a hermetic glass seal.
